(19) Europäisches Patentamt
European Patent Office
Office européen des brevets

(11) Veröffentlichungsnummer: **0 499 822 A1**

# (12) EUROPÄISCHE PATENTANMELDUNG

(21) Anmeldenummer: **92101118.5**

(22) Anmeldetag: **24.01.92**

(51) Int. Cl.[5]: **B41M 5/38**, C09B 55/00, C09B 23/14

(30) Priorität: **20.02.91 DE 4105197**

(43) Veröffentlichungstag der Anmeldung:
**26.08.92 Patentblatt 92/35**

(84) Benannte Vertragsstaaten:
**CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Bach, Volker, Dr.**
**Robert-Schuman-Strasse 8**
**W-6730 Neustadt(DE)**
Erfinder: **Etzbach, Karl-Heinz, Dr.**
**Carl-Bosch-Ring 55**
**W-6710 Frankenthal(DE)**
Erfinder: **Sens, Ruediger, Dr.**
**Medicusstrasse 12**
**W-6800 Mannheim 1(DE)**

## (54) Bichromophore Methinfarbstoffe.

(57) Bichromophore Methinfarbstoffe der Formel

A = N-Z-L-Y-W = B ,

in der

- A und B — den Rest einer CH-aciden Verbindung,
- W — Stickstoff oder den Rest

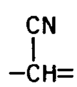 ,

- L — ein Brückenglied, das keine Konjugation von $\pi$-Elektronen zwischen den Resten Z und Y zuläßt, und
- Z und Y — einen gegebenenfalls benzoanellierten Aminophenylrest oder einen heterocyclischen Rest bedeuten,

sowie ein Verfahren zu ihrer thermischen Übertragung.

EP 0 499 822 A1

Die vorliegende Erfindung betrifft neue bichromophore Methinfarbstoffe der Formel I

A = N-Z-L-Y-W = B (I),

in der

- A und B gleich oder verschieden sind und unabhängig voneinander jeweils für den Rest einer CH-aciden Verbindung,
- W für Stickstoff oder den Rest

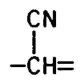

- L für ein Brückenglied, das keine Konjugation von $\pi$-Elektronen zwischen den Resten Z und Y zuläßt, und
- Z und Y gleich oder verschieden sind und in Verbindung mit dem Brückenglied L unabhängig voneinander jeweils für einen Rest der Formel

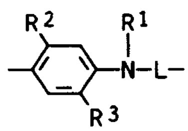 , 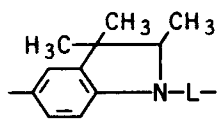 , 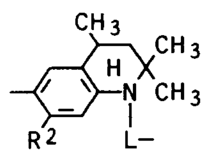 ,

(IIa) (IIb) (IIc)

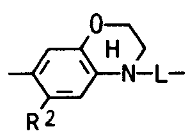 , 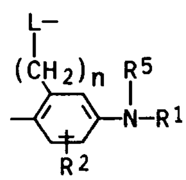 , 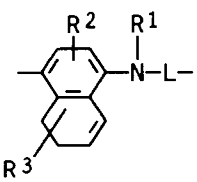 ,

(IId) (IIe) (IIf)

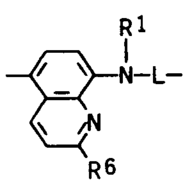 oder 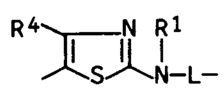

(IIg) (IIh)

stehen, worin

- n 0 oder 1,
- $R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,
- $R^2$ Wasserstoff, $C_1$-$C_8$-Alkyl, $C_1$-$C_6$-Alkoxy einen Rest der Formel $R^7$-CO-NH-, $R^7$-O-CO-NH- oder $R^7$-$SO_2$NH-, worin $R^7$ die Bedeutung von Phenyl, Tolyl, Benzyl oder $C_1$-$C_8$-Alkyl, das durch ein oder zwei Sauerstoffatome in Etherfunktion unterbrochen sein kann, besitzen,
- $R^3$ Wasserstoff, Methyl, Ethyl oder $C_1$-$C_4$-Alkoxy,
- $R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, worin $R^1$ die obengenannte Bedeutung besitzt, und
- $R^6$ Wasserstoff oder $C_1$-$C_8$-Alkyl bedeuten,

sowie ein Verfahren zur thermischen Übertragung dieser Farbstoffe.

Bichromophore Methinfarbstoffe, die Dicyanovinylreste aufweisen, sind z.B. aus der GB-A-1 201 925, US-A-3 553 245, DE-A-1 569 678, DE-A-2 519 592 oder DE-A-3 020 473 bekannt.

Aufgabe der vorliegenden Erfindung war es, neue bichromophore Methinfarbstoffe bereitzustellen, die über vorteilhafte anwendungstechnische Eigenschaften verfügen sollten.

Demgemäß wurden die eingangs näher bezeichneten bichromophoren Methinfarbstoffe der Formel I gefunden.

Alle in der obengenannten Formel I auftretenden Alkyl- oder Alkylengruppen können sowohl geradkettig als auch verzweigt sein.

Das Brückenglied L, das keine Konjugation von $\pi$-Elektronen zwischen den Resten Z und Y zuläßt, gehorcht im allgemeinen der Formel

$-E^1-D-E^2-$ ,

worin

D eine chemische Bindung, Sauerstoff, $-S0_2-$, -0-C0-0, 1,4-Cyclohexylen, Phenylen, $-0-C0-(CH_2)_1-C0-0$, $-0-(CH_2)_m-0-$,

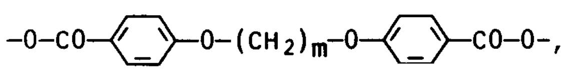

wobei 1 für 1 bis 10 und m für 2 bis 10 stehen,

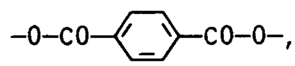 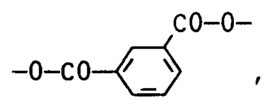 ,

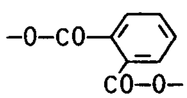 oder 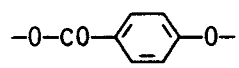

und

$E^1$ und $E^2$ gleich oder verschieden sind und unabhängig voneinander jeweils eine chemische Bindung oder $C_1$-$C_{15}$-Alkylen bedeuten.

Geeignete CH-acide Verbindungen $AH_2$ oder $BH_2$, von denen sich die Reste A und B in Formel I ableiten, sind z.B. Nitromethan, Nitroethan oder eine Verbindung der Formel

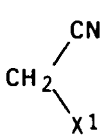 ,
(IVa)

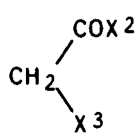 ,
(IVb)

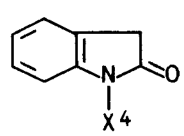 ,
(IVc)

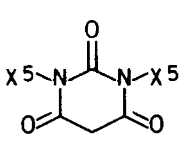 ,
(IVd)

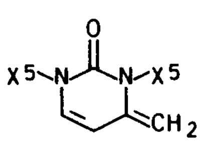 oder
(IVe)

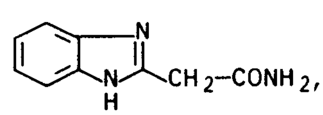
(IVf)

worin

$X^1$ Cyano, Nitro, $C_1$-$C_4$-Alkanoyl, gegebenenfalls durch $C_1$-$C_4$-Alkyl, $C_1$-$C_4$-Alkoxy oder Halogen substituiertes Benzoyl, $C_1$-$C_4$-Alkylsulfonyl, gegebenenfalls durch $C_1$-$C_4$-Alkyl, $C_1$-$C_4$-Alkoxy oder Halogen substituiertes Phenylsulfonyl, Carboxyl, gegebenenfalls durch 1 oder 2 Sauerstoffatome in Etherfunktion unterbrochenes $C_1$-$C_6$-Alkoxycarbonyl, $C_5$-$C_7$-Cycloalkoxycarbonyl, Phenoxycarbonyl, Carbamoyl, gegebenenfalls durch 1 oder 2 Sauerstoffatome in Etherfunktion unterbroche-

nes $C_1$-$C_6$-Mono- oder Dialkylcarbamoyl, $C_5$-$C_7$-Mono- oder Dicycloalkylcarbamoyl, gegebenenfalls durch $C_1$-$C_4$-Alkyl, $C_1$-$C_4$-Alkoxy oder Halogen substituiertes Phenylcarbamoyl, gegebenenfalls durch $C_1$-$C_4$-Alkyl, Cyano, $C_1$-$C_4$-Alkoxy, Halogen oder Nitro substituiertes Phenyl, Benzthiazol-2-yl, Benzimidazol-2-yl, 5-Phenyl-1,3,4-thiadiazol-2-yl oder 2-Hydroxychinoxalin-3-yl,

$X^2$ $C_1$-$C_4$-Alkyl oder $C_1$-$C_4$-Alkoxy,

$X^3$ $C_1$-$C_4$-Alkoxycarbonyl, Phenylcarbamoyl oder Benzimidazol-2-yl,

$X^4$ $C_1$-$C_4$-Alkyl und

$X^5$ Wasserstoff, $C_1$-$C_4$-Alkyl oder Phenyl bedeuten.

Dabei sind insbesondere Reste zu nennen, die sich von CH-aciden Verbindungen der Formel IVa oder IVb ableiten.

Geeignete Reste $R^1$, $R^2$, $R^4$, $R^5$, $R^6$ und $R^7$ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl oder Isooctyl.

Reste $R^2$ sind, wie auch Reste $R^3$, weiterhin z.B. Methoxy, Ethoxy, Propoxy, Butoxy oder sec-Butoxy.

Reste $R^1$ und $R^5$ sind weiterhin z. B. Nonyl, Isononyl, Decyl, Isodecyl, 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 4-Methoxybutyl, 4-Ethoxybutyl, 4-Butoxybutyl, 2-Cyanoethyl, 3-Cyanopropyl, 4-Cyanobutyl, 2-Hydroxyethyl,

$$-CH_2)_2-O-\overset{\overset{O}{\|}}{C}-CH_3,\quad -(CH_2)_2-\overset{\overset{O}{\|}}{C}-O-C_4H_9,\quad -(CH_2)_4-\overset{\overset{O}{\|}}{C}-O-CH(CH_3)_2 \quad \text{oder}$$

$$-(CH_2)_3-\overset{\overset{O}{\|}}{C}-O-C_4H_9\ .$$

Reste $R^4$ sind weiterhin z.B. Phenyl, 2-, 3- oder 4-Methylphenyl, 2- oder 4-Isopropylphenyl, 2-Butylphenyl, 2-, 3- oder 4-Methoxyphenyl, 2-Propoxyphenyl, 4-Butoxyphenyl, 2-(But-2-oxy)phenyl, Benzyl, 2-, 3- oder 4-Methylbenzyl, 2-, 3- oder 4-Methoxybenzyl, Fluor, Chlor, Brom, Thien-2-yl oder Thien-3-yl.

Reste $R^2$ sind weiterhin z.B. Pentyloxy, Isopentyloxy, Neopentyloxy, Hexyloxy, Acetylamino, Propionylamino, Butyrylamino, 3-Oxabutylcarbonylamino, 3-Oxapentylcarbonylamino, 3-Oxaheptylcarbonylamino, 3,6-Dioxaheptylcarbonylamino, 3,6-Dioxaoctylcarbonylamino, Benzylcarbonylamino, 2-, 3- oder 4-Tolylcarbonylamino, Methoxycarbonylamino, Ethoxycarbonylamino, Propoxycarbonylamino, Isopropoxycarbonylamino, Butoxycarbonylamino, Pentyloxycarbonylamino, Hexyloxycarbonylamino, 3-Oxapentyloxycarbonylamino, Benzyloxycarbonylamino, Methylsulfonylamino, Ethylsulfonylamino, Propylsulfonylamino, Isopropylsulfonylamino oder Butylsulfonylamino.

Reste $X^1$ sind z.B. Methoxycarbonyl, Ethoxycarbonyl, Propoxycarbonyl, Isopropoxycarbonyl, Butoxycarbonyl, 2-Methoxyethoxycarbonyl, Methylcarbamoyl, Ethylcarbamoyl, 2-Methoxyethylcarbamoyl, Cyclopentyloxycarbonyl, Cyclohexyloxycarbonyl, Cycloheptyloxycarbonyl, Cyclopentylcarbamoyl, Cyclohexylcarbamoyl oder Cycloheptylcarbamoyl.

Reste $E^1$ und $E^2$ sind z.B. Methylen, 1,2-Ethylen, Ethyliden, 1,2- oder 1,3-Propylen oder 1,4-, 1,3- oder 2,3-Butylen.

Reste D sind z.B.

$$-O-\overset{\overset{O}{\|}}{C}-CH_2-\overset{\overset{O}{\|}}{C}-O-,\quad -O-\overset{\overset{O}{\|}}{C}-(CH_2)_2-\overset{\overset{O}{\|}}{C}-O-,\quad -O-\overset{\overset{O}{\|}}{C}-(CH_2)_3-\overset{\overset{O}{\|}}{C}-O-,\quad -O-\overset{\overset{O}{\|}}{C}-(CH_2)_4-\overset{\overset{O}{\|}}{C}-O-,$$

$$-O-\overset{\overset{O}{\|}}{C}-(CH_2)_5-\overset{\overset{O}{\|}}{C}-O-,\quad -O-\overset{\overset{O}{\|}}{C}-(CH_2)_6-\overset{\overset{O}{\|}}{C}-O-,\quad -O-\overset{\overset{O}{\|}}{C}-(CH_2)_7-\overset{\overset{O}{\|}}{C}-O-,$$

$$-O-\overset{\overset{O}{\|}}{C}-(CH_2)_8-\overset{\overset{O}{\|}}{C}-O-,\quad -O-\overset{\overset{O}{\|}}{C}-(CH_2)_9-\overset{\overset{O}{\|}}{C}-O-,\quad -O-\overset{\overset{O}{\|}}{C}-(CH_2)_{10}-\overset{\overset{O}{\|}}{C}-O-,$$

$-O-(CH_2)_2-O-$, $-O-(CH_2)_3-O-$, $-O-(CH_2)_4-O-$, $-O-(CH_2)_5-O-$, $-O-(CH_2)_6-O-$, $-O-(CH_2)_7-O-$, $-O-(CH_2)_8-O-$, $-O-(CH_2)_9-O-$, $-O-(CH_2)_{10}-O-$,

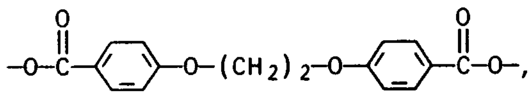
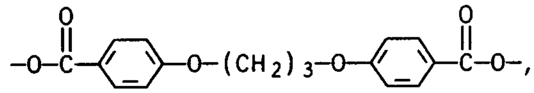
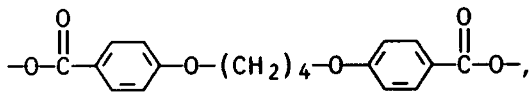
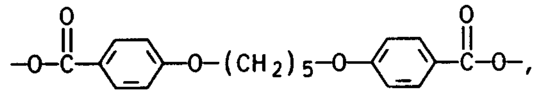
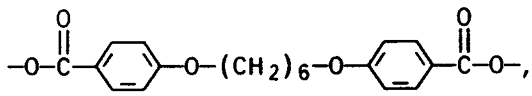
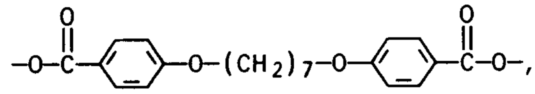
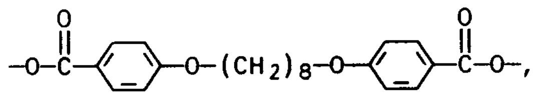
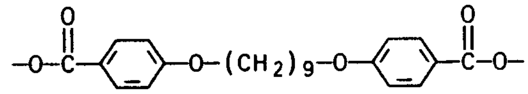

oder 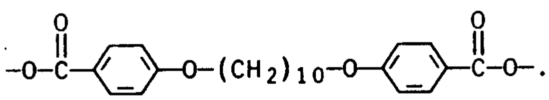

Bevorzugt sind bichromophore Methinfarbstoffe der Formel III

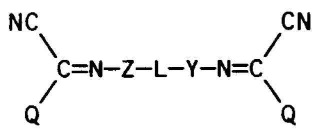 (III),

worin

Q gleich oder verschieden ist und jeweils Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome in Etherfunktion unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl bedeutet, und

Z, L und Y jeweils die obengenannte Bedeutung besitzen.

Bevorzugt sind weiterhin bichromophore Methinfarbstoffe der Formel I, worin die Reste Z-L und Y-L den Formeln IIa bis IIg gehorchen.

Bevorzugt sind weiterhin bichromophore Methinfarbstoffe der Formel I, worin

$R^1$ und $R^5$ unabhängig voneinander Wasserstoff, gegebenenfalls durch Cyano oder Acetoxy substituiertes $C_1$-$C_6$-Alkyl, Benzyl oder Cyclohexyl,

$R^2$ Wasserstoff, Methyl, Methoxy oder Acetylamino,

$R^3$ Wasserstoff, Methyl, Ethyl oder Methoxy,

$R^4$ Wasserstoff, $C_1$-$C_6$-Alkyl, gegebenenfalls durch Methyl oder Methoxy, substituiertes Phenyl, Thien-2-yl oder Thien-3-yl und

$R^6$ Wasserstoff oder $C_1$-$C_6$-Alkyl bedeuten.

Besonders bevorzugt sind bichromophore Methinfarbstoffe der Formel III, worin Q Cyano bedeutet.

Besonders bevorzugt sind weiterhin bichromophore Methinfarbstoffe der Formel I, worin das Brückenglied L die Formel

$-E^1-D-E^2-$

aufweist, wobei

$E^1$ und $E^2$ unabhängig voneinander $C_1$-$C_4$-Alkylen und

D eine chemische Bindung, Sauerstoff, $-SO_2-$, $-O-CO-(CH_2)_l-CO-O$,

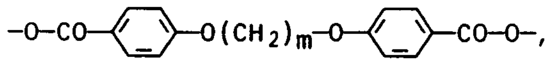

wobei 1 für 2 bis 4 und m für 6 bis 10 stehen,

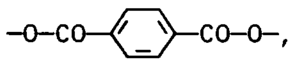, 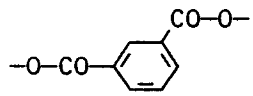

oder

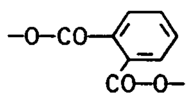

bedeuten.

Die erfindungsgemäßen Methinfarbstoffe I können nach an sich bekannten Methoden, wie sie beispielsweise in der GB 1 201 925, US-A-3 553 245, DE-A-1 569 678, DE-A-2 519 592, DE-A-3 020 473, US-A-2 889 335 oder EP-A-284 560 beschrieben sind, erhalten werden.

Eine bevorzugte Verfahrensweise besteht z.B. darin, zuerst die beiden im Farbstoff als Donator wirkenden Gruppen Z und Y mittels eines entsprechenden Brückengliedes miteinander zu verknüpfen und aus den resultierenden Zwischenprodukten (nachfolgend als Farbstoffvorprodukte bezeichnet) anschließend die bichromophoren Methinfarbstoffe I durch den Einbau beispielsweise von Cyanovinylgruppen herzustellen.

Zur näheren Erläuterung sind beispielhaft Syntheseschemata zur Herstellung bestimmter bichromophorer Methinfarbstoffe I aufgeführt. Für Z, Y, Q, $R^1$, $R^2$, $R^3$, 1 und m gilt dabei jeweils die obengenannte Bedeutung.

a) Synthese der Farbstoffvorprodukte

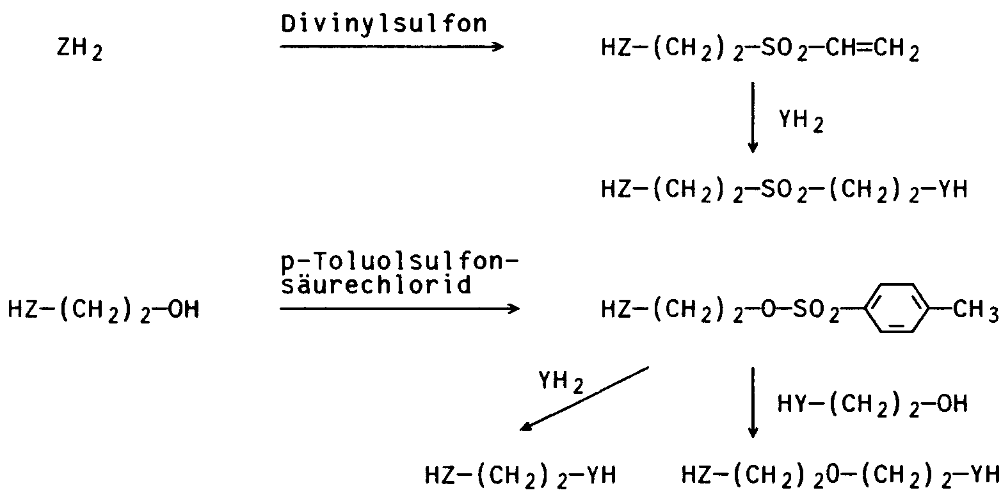


b) Einbau symmetrischer Akzeptorgruppen in die Chromophore:

b1) Kondensation

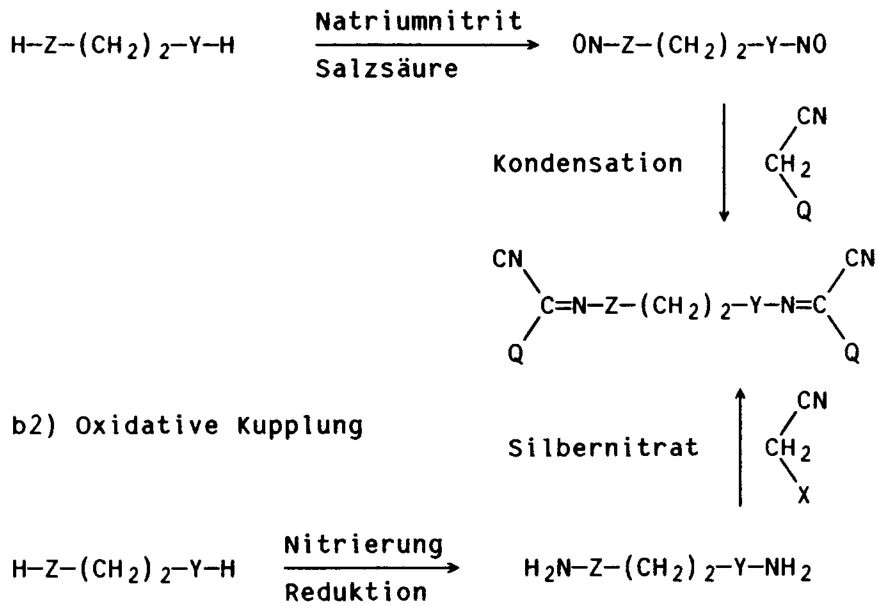


b2) Oxidative Kupplung

c) Einbau unsymmetrischer Akzeptorgruppen

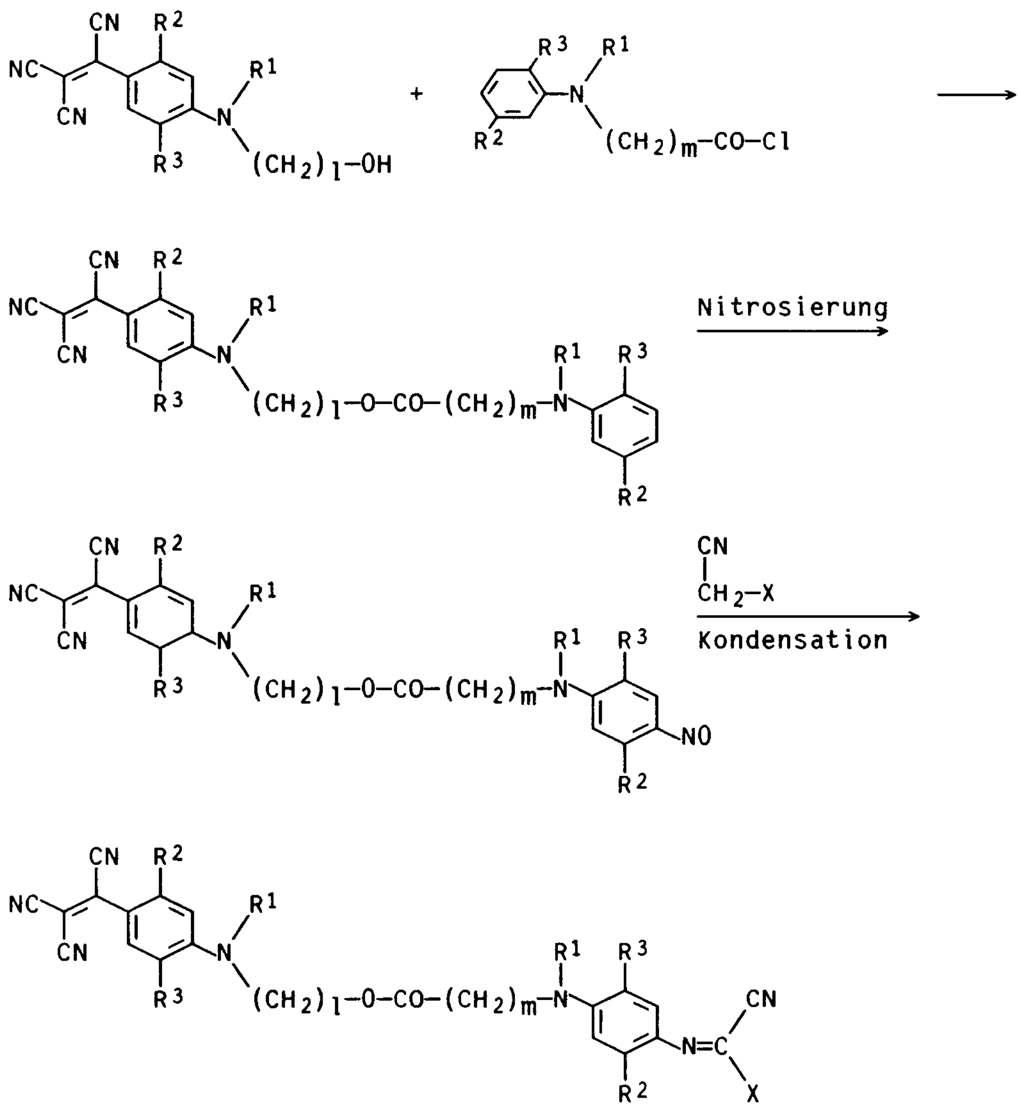


Analog können auch die anderen Farbstoffvorprodukte umgesetzt werden.

Die neuen Farbstoffe I verfügen über eine vorteilhafte Löslichkeit in organischen Lösungsmitteln.

Eine weitere Aufgabe der vorliegenden Erfindung war es, ein neues Vefahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt. Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,

- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von bichromophoren Methinfarbstoffen von einem Träger auf ein mit Kunststoff beschichtetes Papier mit Hilfe eines Thermokopfes vorteilhaft gelingt, wenn man einen Träger verwendet, auf dem sich ein oder mehrere Farbstoffe der obengenannten Formel I befinden.

Im Vergleich zu den bei den bekannten Verfahren verwendeten Farbstoffen zeichnen sich die beim erfindungsgemäßen Verfahren übertragenen Farbstoffe im allgemeinen durch verbesserte Fixierung im Aufnahmemedium bei Raumtemperatur, leichtere thermische Transferierbarkeit, höhere Lichtechtheit, höhere Stabilität gegenüber Feuchtigkeit und chemischen Stoffen, bessere Löslichkeit in organischen Lösungsmitteln, höhere Farbbandstabilität und höhere Farbtonreinheit aus.

Weiterhin ist überraschend, daß die Farbstoffe der Formel I gut transferierbar sind und hohe Farbbandstabilität aufweisen, obwohl sie ein sehr hohes Molekulargewicht aufweisen.

In den bisher bekannten Thermotransferdruck-Systemen werden im allgemeinen Mischungen monochromophorer Farbstoffe eingesetzt, um im Cyan- und besonders im Magentabereich jeweils ca. ein Drittel des einfallenden weißen Lichtes zu absorbieren. Dabei tritt das Problem auf, daß die eingesetzten Farbstoffe exakt gleiches Transferverhalten zeigen müssen, damit bei einer vorgegebenen Leistung der verwendeten Energiequelle gleiche Anfärbungen des Aufnahmemediums (Nehmer) erreicht werden. Beim erfindungsgemäßen Verfahren treten diese Nachteile nicht mehr auf. Daraus resultiert z.B. bei der Verwendung von Trichromiesystemen ein verbesserter schwarzer Druck.

Aufgrund ihrer hohen molaren Extinktionskoeffizienten und steilen Absorptionsflanken (hohe Brillanz) sind die im neuen Verfahren angewandten Farbstoffe der Formel I für die Herstellung eines für die subtraktive Farbmischung erforderlichen Trichromiesystems vorteilhaft geeignet.

Zusätzlich erlaubt die gute Transferierbarkeit eine große Variation der als Nehmer verwendeten Kunststoffe und somit eine sehr gute Anpassung der Farbstoffe in das Gesamtsystem (Geber/Nehmer).

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20°C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Solche Bindemittel sind beispielsweise in der älteren Patentanmeldung EP P 441 282 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyrat, Polyvinylacetat oder gesättigte lineare Polyester.

Das Gewichtsverhältnis Bindemittel:Farbstoff beträgt im allgemeinen 1:1 bis 10:1.

Als Hilfsmittel kommen z.B. Trennmittel in Betracht, wie sie in der älteren deutschen Patentanmeldung P 40 04 612.5 oder den entsprechenden dort zitierten Patentanmeldungen genannt sind.

Geeignete inerte Träger sind z.B. in der älteren Patentanmeldung EP-A-441 282 oder in den entsprechenden dort zitierten Patentanmeldungen beschrieben. Die Dicke des Farbstoffträgers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der älteren Patentanmeldung EP-A-441 282 oder den entsprechenden dort zitierten Patentanmeldungen entnommen werden.

Die Übertragung erfolgt mittels einer Energiequelle, z.B. mittels eines Lasers oder mittels eines

Thermokopfes, wobei der letztere auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten. Insbesondere zu nennen sind textile Gewebe aus Polyester oder Polyester-Baumwolle-Mischgewebe.

Die neuen Farbstoffe eignen sich weiterhin vorteilhaft für die Herstellung von Farbfiltern, wie sie z.B. in der EP-A-399 473 beschrieben sind. Schließlich können sie auch vorteilhaft als Farbmittel für die Herstellung von Tonern für die Elektrophotographie verwendet werden.

Die folgenden Beispiele sollen die Erfindung näher erläutern. Angaben über Prozente beziehen sich, sofern nicht anders vermerkt, auf das Gewicht.

I. Herstellung der Methinfarbstoffe

Beispiel A

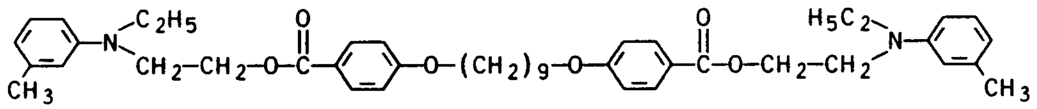

50 g 1,9-Dibromnonan, 58,1 g 4-Hydroxybenzoesäureethylester und 94,2 g Kaliumcarbonat wurden bei Raumtemperatur in 500 ml N,N-Dimethylformamid (wasserfrei) verrührt und anschließend solange auf 100 °C erhitzt bis dünnschichtchromatographisch kein Ausgangsmaterial mehr nachweisbar war. Das abgekühlte Reaktionsgemisch wurde abgesaugt und das Lösungsmittel unter vermindertem Druck entfernt. Der Rückstand wurde aus Methanol umkristallisiert (37,4 g Reinsubstanz), mit 300 ml Ethanol versetzt, zu einer Mischung aus 19,9 g Kaliumhydroxid in 260 ml Ethanol gegeben und auf Rückflußtemperatur gebracht. Nach vollständiger Verseifung (DC-Kontrolle) wurde auf Raumtemperatur abgekühlt, abgesaugt, der Rückstand in Wasser verrührt, mit Salzsäure angesäuert, erneut abgesaugt und neutral gewaschen. Man erhielt 28,3 g Reinsubstanz.

$^1$H-NMR ($CDCl_3$, TMS): $\delta$ = 1,10 bis 1,90 (m, 14 H, $CH_2$), 4,05 (t, 4 H, $OCH_2$), 7,00 (d, 4 H, Aromat-H), 7,90 (d, 4 H, Aromat-H), 12,15 (s, 2 H, COOH) ppm

28 g des erhaltenen Produkts wurden in 120 ml Thionylchlorid verrührt und unter Erwärmen auf Rückflußtemperatur gelöst. Nach vollständiger Umsetzung wurde die Lösung auf Raumtemperatur abgekühlt, das Reaktionsprodukt mit Petrolether gefällt, der Niederschlag abgesaugt, mit Petrolether nachgewaschen (IR: COCl, 1760 bis 1740 $cm^{-1}$) und danach in 50 ml Methylenchlorid gelöst. Diese Lösung wurde zu 22,9 g N-(2-Hydroxyethyl)-N-ethyl-3-methylanilin, einer Spatelspitze 4-Dimethylaminopyridin und 6,5 g Triethylamin in 50 ml wasserfreiem Methylenchlorid bei einer Temperatur von 0 bis 5 °C getropft. Danach wurde bei Raumtemperatur bis zur vollständigen Umsetzung weiter gerührt. Das Reaktionsgemisch wurde in Eiswasser eingerührt, mit verdünnter Salzsäure angesäuert und mit Methylenchlorid extrahiert. Die organische Phase wurde mit Wasser neutral gewaschen, getrocknet und das Lösungsmittel unter vermindertem Druck entfernt (Ausbeute: 42 g, $R_f$-Wert: 0,32 Toluol/Essigester 5:1 v/v - DC-Alufolien, Kieselgel 60 $F_{254}$ der Fa. E. Merck).

Beispiel B

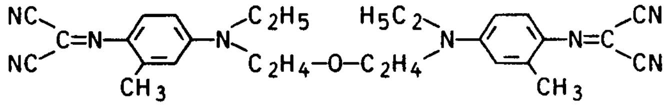

10,16 g der Verbindung der Formel

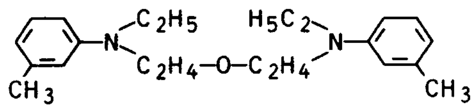

wurden in 100 ml Wasser und 50 ml konz. Salzsäure gelöst. Anschließend wurden bei 0 bis 5 ° C 19 ml 23 gew.%ige wäßrige Natriumnitritlösung zugetropft und zwei Stunden bei 0 bis 5 ° C nachgerührt. Nach Beendigung der Nitrosierung wurde mit 25 gew.%iger wäßriger Ammoniumhydroxidlösung auf einen pH-Wert von 8 gestellt und die Nitrosoverbindung in neutraler Form in Methylenchlorid aufgenommen. Nach Zugabe von 4 g Malondinitril und 30 ml Acetanhydrid wurde kurzzeitig auf 70 ° C erhitzt und anschließend auf Raumtemperatur abgekühlt. Nach Zugabe von 100 ml Isopropanol und 10 ml Wasser fiel das Zielprodukt aus und wurde abgesaugt. Nach Waschen mit Methanol erhielt man 5,3 g Farbstoff (≙ 35,8 % d.Th.), Schmp.: 86 ° C; $R_f$-Wert: 0,33 Toluol/Essigester 9:1 v/v-DC-Alufolien, Kieselgel 60 $F_{254}$ der Fa. Merck; $\lambda_{max}$ (Tetrahydrofuran): 497 nm.

Beispiel C

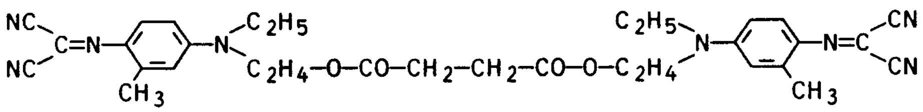

11,12 g der Verbindung der Formel

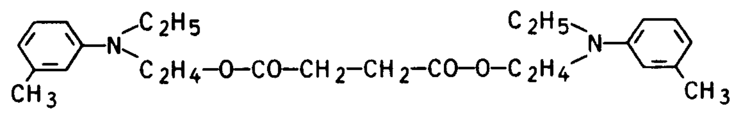

wurden analog Beispiel B nitrosiert und mit 3,4 g Malondinitril in 30 ml Acetanhydrid kondensiert. Das Reaktionsgemisch wurde anschließend mit 220 ml Isopropanol versetzt, woraufhin sich ein Öl abschied, das nach Stehen übers Wochenende kristallisierte. Der Niederschlag wurde abgesaugt und mit etwas Isopropanol gewaschen. Man erhielt 6,04 g (≙ 40,4 % d.Th.) an Farbstoff. $R_f$-Wert: 0,20 Toluol/Essigester 8:2 v/v-DC-Alufolien, Kieselgel 60 $F_{254}$ der Fa. E. Merck; $\lambda_{max}$ (Tetrahydrofuran): 492 nm.

In analoger Weise wurden die in der folgenden Tabelle 1 aufgeführten Farbstoffe der Formel

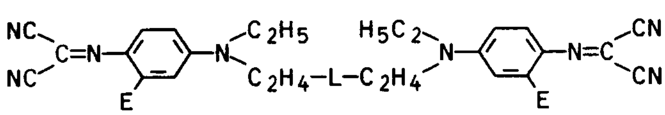

erhalten.

Tabelle 1

| Bsp. Nr. | E | L | $R_f$-Wert | $\lambda_{max}$ [nm] |
|---|---|---|---|---|
| D | H | 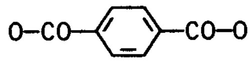 | 0,46 a) | 484 |
| E | H | 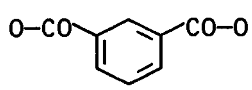 | 0,46 a) | 485 |
| F | $CH_3$ | 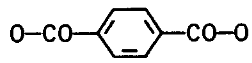 | 0,30 b) | 492 |

a) Laufmittel: Toluol/Essigester 3:2 v/v

b) Laufmittel: Toluol/Essigester 8:2 v/v

Entwickelt wurde jeweils auf PC-Alufolien, Kieselgel 60 $F_{254}$ der Fa. E. Merck.

II. Transfer der Methinfarbstoffe

Um das Transferverhalten der Farbstoffe quantitativ und in einfacher Weise prüfen zu können, wurde der Thermotransfer mit großflächigen Heizbacken anstelle eines Thermokopfes durchgeführt, wobei die Transfertemperatur im Bereich 70 °C < T < 120 °C variiert und die Transferzeit auf 2 Minuten festgelegt wurde.

α) Allgemeines Rezept für die Beschichtung der Träger mit Farbstoff: 1 g Bindemittel wurden in 8 ml Toluol/Ethanol (8:2 v/v) bei 40 bis 50 °C gelöst. Dazu wurde eine Lösung aus x g Farbstoff in 5 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit Die verwendeten Farbstoffe wurden in der folgenden Weise geprüft: Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 40 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in der folgenden Tabelle 2 aufgeführten Farbstoffe wurden nach α) verarbeitet und die erhaltenen, mit Farbstoff beschichteten Träger nach β) auf das Transferverhalten geprüft. In der Tabelle sind jeweils die Thermotransferparameter T* und $\Delta E_T$, die Absorptionsmaxima der Farbstoffe $\lambda_{max}$ (gemessen in Methylenchlorid), die verwendeten Bindemittel sowie das Gewichtsverhältnis Farbstoff:Bindemittel aufgeführt.

Dabei gelten folgende Abkürzungen:

F = Farbstoff
B = Bindemittel
V = Vylon® 290 der Fa. Toyobo
CP = Cellulosepropionat
HCVPP = Hitachi Color Video Print Paper (Nehmer)
PBTP = Polybutylenterephthalat-Folie (Nehmer)

Tabelle 2

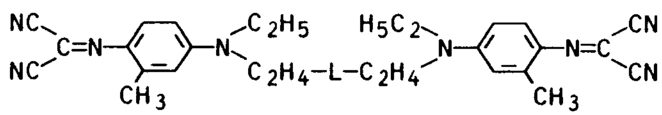

| Bsp. Nr. | L | Nehmer | B | F:B | $\lambda_{max}$ [nm] | T* [°C] | $\Delta E_T$ [kcal/mol] |
|---|---|---|---|---|---|---|---|
| 1 | O | PBTB | V | 1:4 | 499 | 73 | 15 |
| 2 | O | HCVPP | V | 1:4 | 499 | < 50 | 5 |
| 3 | $O-CO-C_2H_4-CO-O$ | PBTB | V | 1:4 | 498 | 94 | 23 |
| 4 | $O-CO-C_2H_4-CO-O$ | HCVPP | V | 1:4 | 498 | < 50 | 11 |
| 5 | 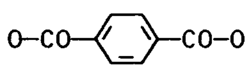 | HCVPP | CP | 1:1 | 491 | 104 | 12 |
| 6 | 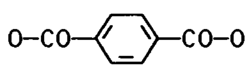 | HCVPP | V | 1:4 | 491 | 82 | 11 |

In analoger Weise können die folgenden Methinfarbstoffe übertragen werden.

Bsp.Nr.

7

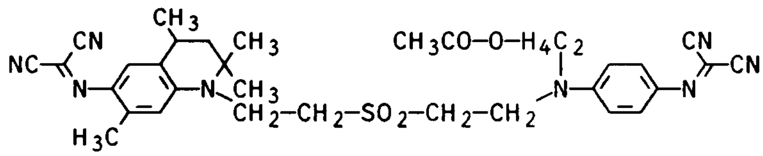

8

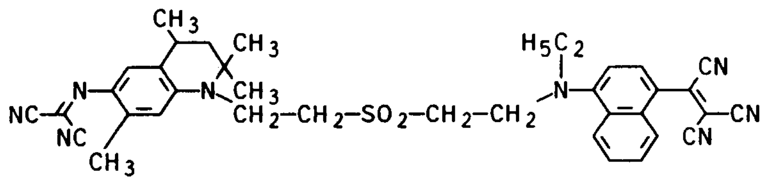

9

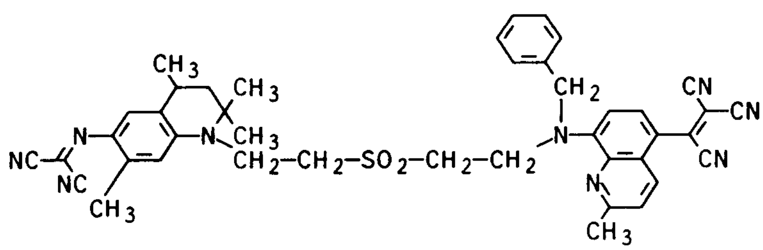

10

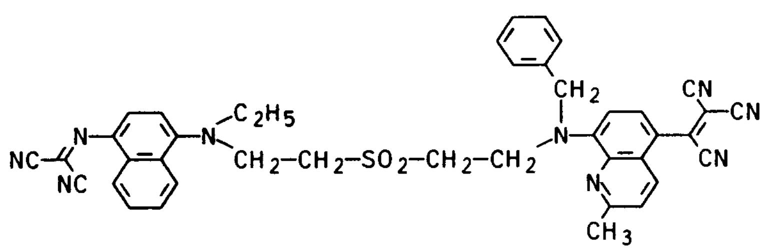

11

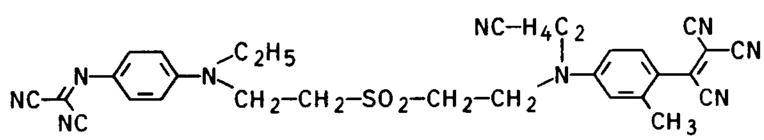

12

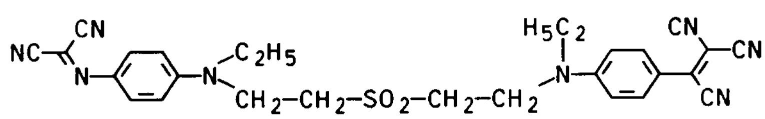

13

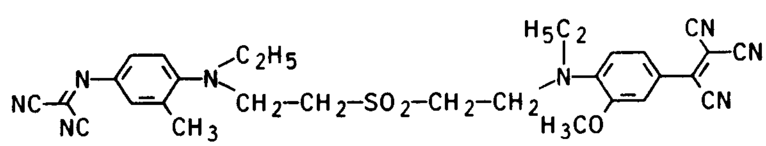

Bsp.Nr.

14

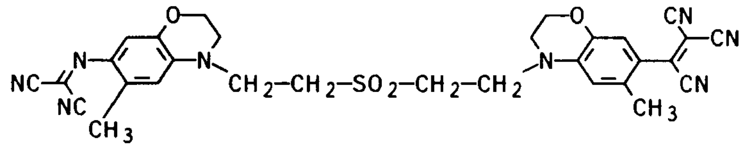

15

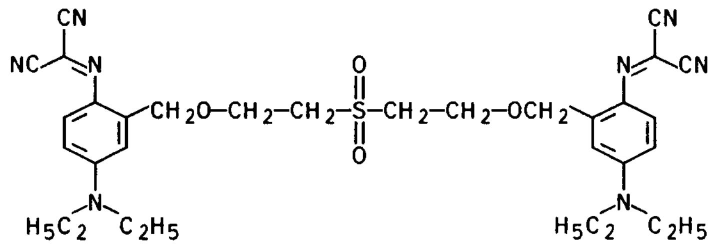

16

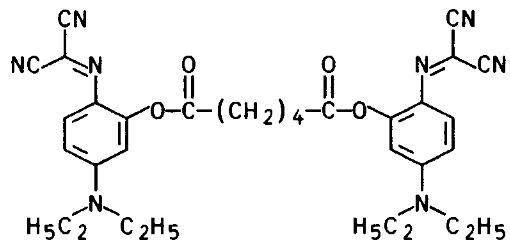

17

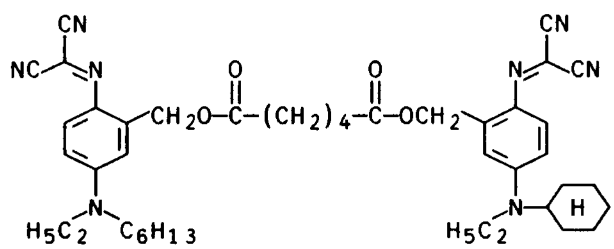

18

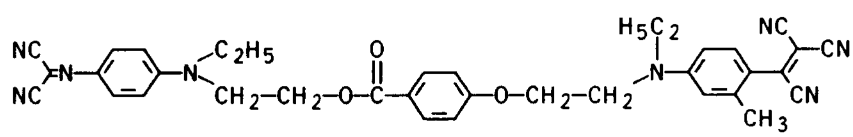

19

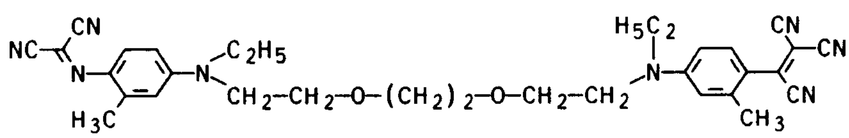

20

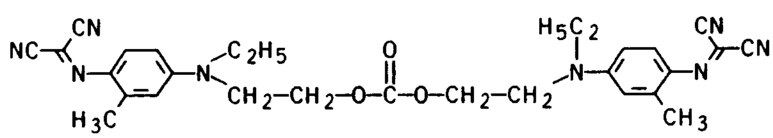

Bsp.Nr.

21 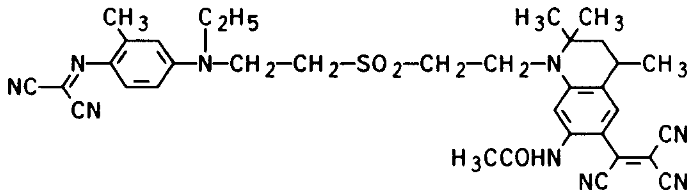

22 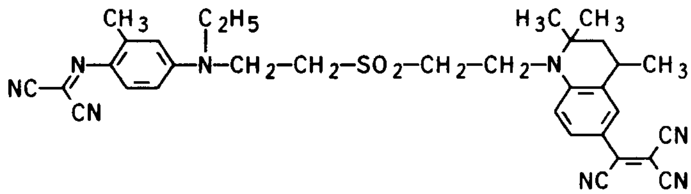

23 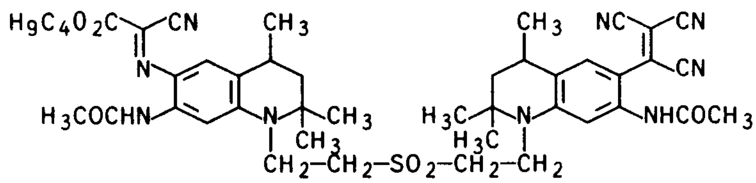

24 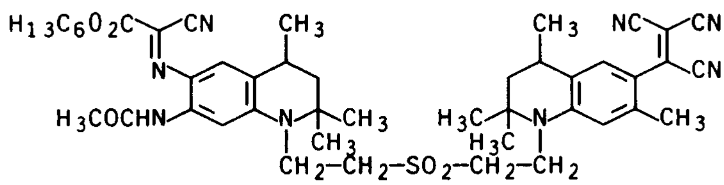

25 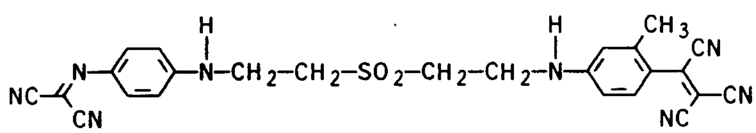

26 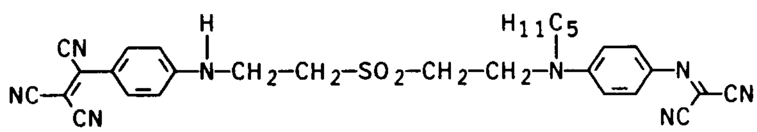

27 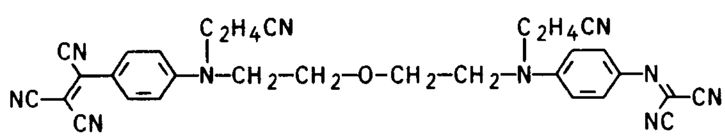

Bsp.Nr.

28 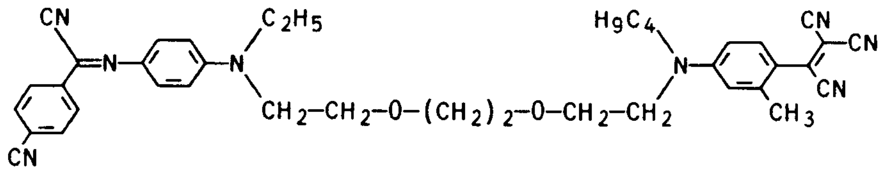

29 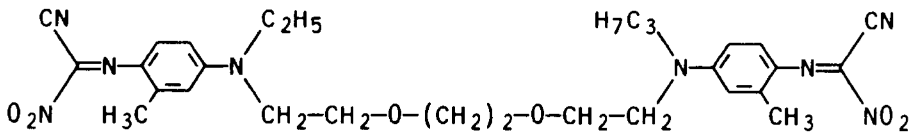

30 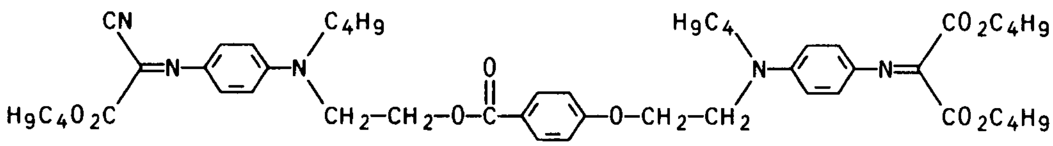

31 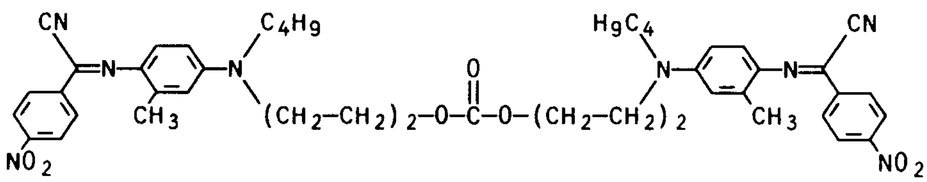

**Patentansprüche**

**1.** Bichromophore Methinfarbstoffe der Formel I

A = N-Z-L-Y-W = B (I),

in der

A und B gleich oder verschieden sind und unabhängig voneinander jeweils für den Rest einer CH-aciden Verbindung,

W für Stickstoff oder den Rest

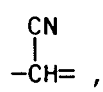

L für ein Brückenglied, das keine Konjugation von $\pi$-Elektronen zwischen den Resten Z und Y zuläßt, und

Z und Y gleich oder verschieden sind und in Verbindung mit dem Brückenglied L unabhängig voneinander jeweils für einen Rest der Formel

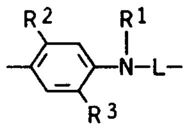 , 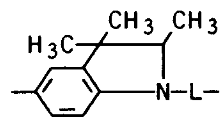 , 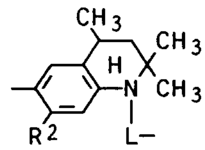 ,

(IIa) (IIb) (IIc)

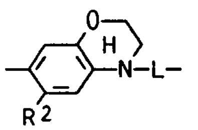 , 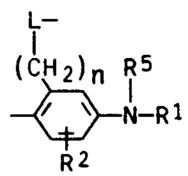 , 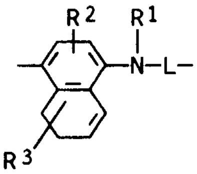 ,

(IId) (IIe) (IIf)

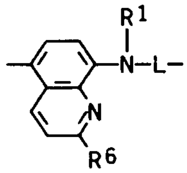 oder 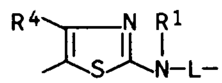

(IIg) (IIh)

stehen, worin

n — 0 oder 1,

$R^1$ und $R^5$ — gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ — Wasserstoff, $C_1$-$C_8$-Alkyl, $C_1$-$C_6$-Alkoxy oder einen Rest der Formel $R^7$-CO-NH-, $R^7$-0-CO-NH- oder $R^7$-$S0_2$NH-, worin $R^7$ die Bedeutung von Phenyl, Tolyl, Benzyl oder $C_1$-$C_8$-Alkyl, das durch ein oder zwei Sauerstoffatome in Etherfunktion unterbrochen sein kann, besitzen,

$R^3$ — Wasserstoff, Methyl, Ethyl oder $C_1$-$C_4$-Alkoxy,

$R^4$ — Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, worin $R^1$ die obengenannte Bedeutung besitzt, und

$R^6$ — Wasserstoff oder $C_1$-$C_8$-Alkyl bedeuten.

**2.** Methinfarbstoffe nach Anspruch 1, die der Formel III

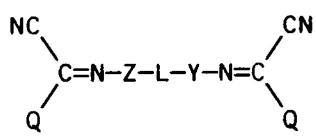 (III)

entsprechen, worin

Q — gleich oder verschieden ist und jeweils Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome in Etherfunktion unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl bedeutet, und

Z, L und Y — jeweils die in Anspruch 1 genannte Bedeutung besitzen.

**3.** Methinfarbstoffe nach Anspruch 2, dadurch gekennzeichnet, daß Q Cyano bedeutet.

**4.** Verfahren zur Übertragung von bichromophoren Methinfarbstoffen von einem Träger auf ein mit Kunststoff beschichtetes Papier mit Hilfe einer Energiequelle, dadurch gekennzeichnet, daß man einen Träger verwendet, auf dem sich ein oder mehrere Farbstoffe der Formel I gemäß Anspruch 1 befinden.

Europäisches Patentamt

# EUROPÄISCHER RECHERCHENBERICHT

Nummer der Anmeldung

EP 92 10 1118

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| X<br><br><br><br><br><br>X | JAPANESE PATENTS GAZETTE<br>Sektion CH, week 9103, 26-03-1991<br>Derwent Publications Ltd., London GB<br>* Klasse G, Seite 25, Nr.: 90-361339/48 *<br>& JP-A-2-292090 (Dainippon Printing K. K.)<br>03-12-1990<br>& WO-A-9013435<br>* Seite 20, Formel V; Seiten 25-27 *<br>& EP-A-427 867 (22-05-1991)<br>--- | 1-4 | B41M5/38<br>C09B55/00<br>C09B23/14 |
| P,X<br><br>D | EP-A-0 441 282 (BASF)<br>* das ganze Dokument *<br>& DE-A-4 004 612<br>--- | 1 | |
| A | CH-A-516 628 (CIBA-GEIGY)<br>* Spalte 1 - Spalte 2, Zeile 7; Ansprüche; Beispiele *<br>--- | 1-3 | |
| D,A | DE-A-1 569 678 (BASF)<br>* Ansprüche *<br>--- | 1-3 | |
| A | FR-A-2 242 445 (HOECHST)<br>* Ansprüche; Beispiele 4,13,16 *<br>--- | 1 | RECHERCHIERTE SACHGEBIETE (Int. Cl.5 ) |
| P,A | EP-A-0 437 282 (BASF)<br>* das ganze Dokument *<br>--- | 1-4 | C09B<br>B41M |
| P,A | EP-A-0 439 200 (BASF)<br>* das ganze Dokument *<br>----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 15 MAI 1992 | KETTERER M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)